# EUROPEAN PATENT APPLICATION

(11) **EP 3 474 566 A1**
(43) Date of publication of application: **24.04.2019**
(21) Application number: 17197383.7
(22) Date of filing: 19.10.2017
(51) Int. Cl.: H04Q 11/00

(54) **METHODS AND PRODUCTS FOR ONU START-UP PROCEDURE**

(71) Applicant: Nokia Solutions and Networks Oy, 02610 Espoo (FI)
(72) Inventor: BONK, Rene, 70435 Stuttgart (DE); PÖHLMANN, Wolfgang, 70435 Stuttgart (DE); BORKOWSKI, Robert, 70435 Stuttgart (DE)
(74) Representative: Louis Pöhlau Lohrentz

(57) **Abstract**

The present invention discloses a method in an Optical Line Terminal, OLT, of assisting a first Optical Network Unit, ONU, starting up a communication with the OLT, the OLT being communicatively coupled to the first ONU that is not yet in operation and a first number of ONUs that are already in operation, wherein, the first number is a natural number; the method comprising: a) assigning to each of the first number of ONUs a time interval within an upstream frame to transmit an upstream burst signal to the OLT ; b) transmitting a first indication in a downstream frame to the first ONU, the first indication indicating the first ONU to transmit an interfering burst a first waiting time later after a reference time point; c) receiving an upstream signal comprising burst signals transmitted by the first number of ONUs and the interfering burst transmitted by the first ONU, wherein, the interfering burst introduces errors in burst signals from at least one of the first number of ONUs, and wherein, the burst signals from the at least one of the first number of ONUs are encoded with a forward error correction, FEC, code; d) correcting the errors in the burst signals from the at least one of the first number of ONUs based on the FEC code; e) assigning a time slot to the first ONU in the upstream frame, and determining a target time of reception (t₁) of a data burst from the first ONU within the time slot; f) determining a time delay between the target time of reception (t₁) and an actual time of reception (t₂) of the interfering burst from the first ONU, wherein, the actual time of reception (t₂) is determined by locating the errors introduced by the interfering burst from the first ONU; g) transmitting an adjustment information in a downstream frame to the first ONU, the adjustment information indicating the time slot assigned to the first ONU in the upstream frame and indicating the first ONU to transmit a data burst based on the time delay determined in step f); h) receiving a data burst transmitted by the first ONU in the time slot.

## Description

### Field of the invention

The invention relates to communication technology, in particular to an optical communication network.

### Background

In a typical Passive Optical Network (PON) scenario a new Optical Network Unit (ONU) is registered in the network during a ranging process, which involves halting the upstream traffic in the entire PON (so-called quiet window) in order to measure the roundtrip delay (RTD) to a new ONU. This is followed by the optical line terminal (OLT) sending instructions to the new ONU to adjust its transmission delay (equalization delay) in order to synchronize in time the new ONU to already registered ONUs, and hence avoid collision at the OLT receiver between bursts originating from the new and previously registered ONUs when normal traffic is resumed. The quiet window needs to be periodically repeated in order to discover newly attached ONUs.

In ITU-T PONs (XG(S)-PON or NG-PON2), the ranging protocol requires quiet windows of 250 µs (multiple of the 125 µs frame duration, dependent on the maximum supported fiber distance). During this window, only unregistered ONUs are allowed to transmit their serial numbers to OLT, and in turn OLT assigns them ONU IDs. Subsequently, further quiet windows are used to measure the RTD to each new ONU, one at a time, and calculate their equalization delay, i.e., a time by which the transmission from this ONU has to be delayed in order to synchronize it with the other ONUs.

Existence of quiet windows requires that the upstream traffic must be buffered for the said period, and hence periodically introduces significant latency into the upstream data transmission. This is an adequate solution for scenarios involving dynamic bandwidth allocation (DBA) with unpredictable traffic, such as non-latency critical residential users. However, for constant throughput scenarios with fixed bandwidth allocation (with DBA turned off) buffering is unacceptable as the amount of the buffered data would grow infinitely with time. Moreover, certain applications such as mobile fronthauling, require very low latency connections (e.g., 5G target of 1 ms end-to-end latency for vehicular applications), for which long traffic interruptions can prevent reaching the latency goal.

An object of the invention is to develop a method for ONU ranging, where quiet windows do not have to be used.

### Summary of the Invention

The object of the invention is achieved by the method and apparatus in the claims.

According to one aspect of the invention, there is provided a method in an Optical Line Terminal, OLT, of assisting a first Optical Network Unit, ONU, starting up a communication with the OLT, the OLT being communicatively coupled to the first ONU that is not yet in operation and a first number of ONUs that are already in operation, wherein, the first number is a natural number; the method comprising: a) assigning to each of the first number of ONUs a time interval within an upstream frame to transmit an upstream burst signal to the OLT; b) transmitting a first indication in a downstream frame to the first ONU, the first indication indicating the first ONU to transmit an interfering burst a first waiting time later after a reference time point; c) receiving an upstream signal comprising burst signals transmitted by the first number of ONUs and the interfering burst transmitted by the first ONU, wherein, the interfering burst introduces errors in burst signals from at least one of the first number of ONUs, and wherein, the burst signals from the at least one of the first number of ONUs are encoded with a forward error correction, FEC, code; d) correcting the errors in the burst signals from the at least one of the first number of ONUs based on the FEC code; e) assigning a time slot to the first ONU in the upstream frame, and determining a target time of reception (t₁) of a data burst from the first ONU within the time slot; f) determining a time delay between the target time of reception (t₁) and an actual time of reception (t₂) of the interfering burst from the first ONU, wherein, the actual time of reception (t₂) is determined by locating the errors introduced by the interfering burst from the first ONU; g) transmitting an adjustment information in a downstream frame to the first ONU, the adjustment information indicating the time slot assigned to the first ONU in the upstream frame and indicating the first ONU to transmit a data burst based on the time delay determined in step f); h) receiving a data burst transmitted by the first ONU in the time slot.

In a preferred embodiment, the upstream frame and the downstream frame being of same duration or a duration of the downstream frame being an integer multiple of a duration of the upstream frame, the reference time point is a time when the first indication is received at the first ONU.

In a preferred embodiment, the reference time point is a clock recorded at the first ONU and related to a duration of the upstream frame.

In a preferred embodiment, the OLT being communicatively coupled to more than one first ONU that is not yet in operation, the method further comprises: - determining a number of the interfering burst comprised in the upstream signal by evaluating errors in the upstream signal; if there is only one interfering burst, the adjustment information comprising the time delay; if there is more than one interfering burst, the adjustment information comprising the time delay and an identification of the first ONU to which the time delay is applied.

In a preferred embodiment, a wavelength of a downstream signal is different from that of an upstream burst.

In a preferred embodiment, the method further comprises: transmitting the first indication repeatedly at a predetermined period interval.

In a preferred embodiment, the data burst transmitted by the first ONU is a physical layer operation, administration and maintenance message, PLOAM, message.

According to another aspect of the present invention, there is provided a method in a first Optical Network Unit, ONU, of starting up a communication with an Optical Line Terminal, OLT, the OLT being communicatively coupled to the first ONU, and a first number of ONUs that are already in operation, the first number being a natural number, each of the first number of ONUs being assigned to a time interval within an upstream frame to transmit an upstream signal to the OLT; the method comprising: a) receiving a first indication in a downstream frame from the OLT, the first indication indicating the first ONU to transmit an interfering burst a first waiting time later after a reference time point; b) transmitting the interfering burst to the OLT at a time of transmission; c) receiving an adjustment information in a downstream frame from the OLT, the adjustment information indicating a time slot assigned to the first ONU in the upstream frame and indicating the first ONU to transmit a data burst based on a time delay; d) determining an adjusted time of transmission based on the time of transmission and the time delay; e) transmitting a data burst to the OLT at the adjusted time of transmission.

In a preferred embodiment, the first waiting time is received from the OLT or determined, in particular, randomly determined, by the first ONU.

In a preferred embodiment, the OLT being communicatively coupled to more than one first ONU that is not yet in operation, and the adjustment information comprising the time delay and an identification of the first ONU to which the time delay is applied, prior to step d), the method further comprises: - determining whether the identification comprised in the adjustment information matches with an identification of the first ONU (130a); if so, the method going on with steps d)-e); else, disregarding the adjustment information from OLT.

In a preferred embodiment, the interfering burst having a predetermined duration or a random duration within a range ensuring the errors introduced by the interfering burst can be corrected based on the FEC code, the duration of the interfering burst is the identification of the first ONU.

In a preferred embodiment, the interfering burst and/or the data burst are transmitted with a maximum transmitter power and a maximum modulation speed of the first ONU.

In a preferred embodiment, the data burst is a physical layer operation, administration and maintenance message, PLOAM, message.

According to another aspect of the present invention, there is provided an Optical Line Terminal, OLT, communicatively coupled to a first ONU that is not yet in operation and a first number of ONUs that are already in operation, wherein, the first number is a natural number; the OLT being configured to: a) assign to each of the first number of ONUs a time interval within an upstream frame to transmit an upstream burst signal to the OLT; b) transmit a first indication in a downstream frame to the first ONU, the first indication indicating the first ONU to transmit an interfering burst a first waiting time later after a reference time point; c) receive an upstream signal comprising burst signals transmitted by the first number of ONUs and the interfering burst transmitted by the first ONU, wherein, the interfering burst introduces errors in burst signals from at least one of the first number of ONUs, and wherein, the burst signals from the at least one of the first number of ONUs are encoded with a forward error correction, FEC, code; d) correct the errors in the burst signals from the at least one of the first number of ONUs based on the FEC code; e) assign a time slot to the first ONU in the upstream frame, and determine a target time of reception (t₁) of a data burst from the first ONU within the time slot; f) determine a time delay between the target time of reception (t₁) and an actual time of reception (t₂) of the interfering burst from the first ONU, wherein, the actual time of reception (t₂) is determined by locating the errors introduced by the interfering burst from the first ONU; g) transmit an adjustment information in a downstream frame to the first ONU, the adjustment information indicating the time slot assigned to the first ONU in the upstream frame and indicating the first ONU to transmit a data burst based on the time delay determined in step f); h) receive a data burst transmitted by the first ONU in the time slot.

According to another aspect of the present invention, there is provided a first Optical Network Unit, ONU, being communicatively coupled to an Optical Line Terminal, OLT, the OLT being further communicatively coupled to a first number of ONUs that are already in operation, the first number being a natural number, each of the first number of ONUs being assigned to a time interval within an upstream frame to transmit an upstream signal to the OLT; the first ONU being configured to: a) receive a first indication in a downstream frame from the OLT, the first indication indicating the first ONU to transmit an interfering burst a first waiting time later after a reference time point; b) transmit the interfering burst to the OLT at a time of transmission; c) receive an adjustment information in a downstream frame from the OLT, the adjustment information indicating a time slot assigned to the first ONU in the upstream frame and indicating the first ONU to transmit a data burst based on a time delay; d) determine an adjusted time of transmission based on the time of transmission and the time delay; e) transmit a data burst to the OLT at the adjusted time of transmission.

According to the present invention, the low-latency and high throughput fronthaul over PON can be realized, i.e., no quiet windows are required to establish new ONU connections in the fixed-mobile converged network. The major advantage is that no additional equipment cost occurs, except a feedback from FEC to media access control.

### Brief description of the figures

The features and advantages of the invention will be more completely understood by appreciating the following detailed description of preferred embodiments with reference to the figures, wherein
Fig. 1 depicts a schematic block diagram of a network topology according to an embodiment of the present invention;
Fig. 2 depicts a schematic block diagram of a network topology according to another embodiment of the present invention;
Fig. 3 depicts a schematic flow diagram of a method according to the embodiment shown in Fig. 1;
Fig. 4 depicts a schematic diagram of an upstream signal received by the OLT.

Wherein, same or similar reference numerals refer to same or similar parts or components.

### Detailed description

Exemplary embodiments of the present application are described herein in detail and shown by way of example in the drawings. It should be understood that, although specific exemplary embodiments are discussed herein there is no intent to limit the scope of the invention to such embodiments. To the contrary, it should be understood that the exemplary embodiments discussed herein are for illustrative purposes, and that modified and alternative embodiments may be implemented without departing from the scope of the invention as defined in the claims. Similarly, specific structural and functional details disclosed herein are merely representative for purposes of describing the exemplary embodiments. The invention described herein, however, may be embodied in many alternate forms and should not be construed as limited to only the embodiments set forth herein.

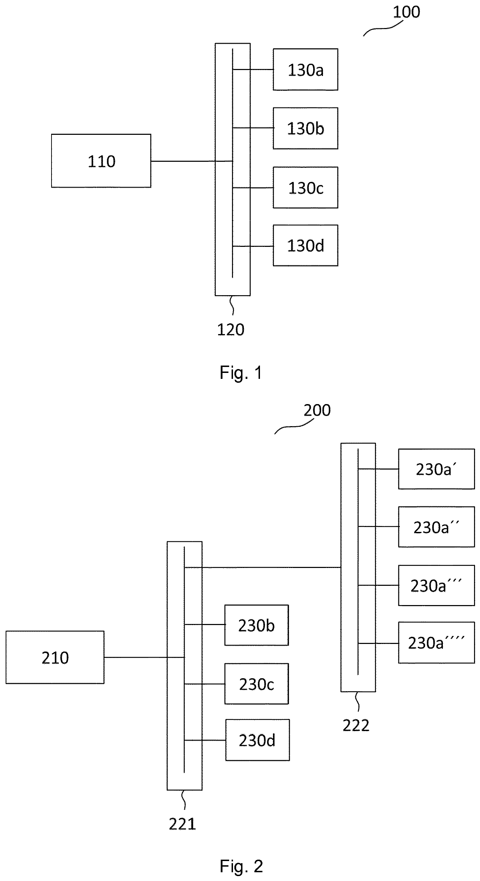

Fig.1 shows a schematic block diagram of a network topology according to an embodiment of the present invention.

The optical network 100 comprises an OLT 110, a power splitter 120, and four ONUs 130a, 130b, 130c and 130d. The number of the ONUs is merely an example. In another embodiment, the optical network 100 may comprise less or more ONUs.

As shown in Fig. 1, the OLT 110 is communicatively coupled to the ONUs 130a, 130b, 130c and 130d via the power splitter 120. The power splitter 120 distributes the downstream signal from the OLT 110 to all the ONUs, and converges the upstream signals from different ONUs to the OLT 110. Preferably, a wavelength of a downstream signal is different from that of an upstream burst. A skilled person shall understand there may be more optical components connected between the OLT 110 and the ONUs, for example more power splitters and/or power amplifier(s).

In the embodiment shown in Fig. 1, the ONUs 130a, 130b and 130d are already in operation and the ONU 130c is not yet in operation. The OLT 110 assigns to each of the ONUs that are already in operation a time interval within a frame. The ONUs that are already in operation use the time interval assigned to them to transmit an upstream burst signal to the OLT 110 respectively. In one embodiment, the time interval assigned to the operational ONUs can be dynamically changed, preferably according to the bandwidth requirement of the respective ONU.

In one embodiment, all the time slots in an upstream frame are assigned to the operational ONUs. In another embodiment, there may be time slots in an upstream frame not assigned to any of the operational ONUs.

Fig. 2 shows a schematic block diagram of a network topology according to another embodiment of the present invention.

In the embodiment shown in Fig. 2, the network components that are similar to those described above with respect to Fig. 1 will not be elaborated.

In Fig. 2, the optical network 200 comprises cascaded power splitters 221 and 222. The power splitter 221 in the first level is connected to the OLT 210 on one side, and one of the branches on the other side is connected to the power splitter 222 in the second level, the other three branches are connected to three ONUs 230b, 230c and 230d respectively. The power splitter in the second level 222 is connected on the right side to four ONUs 230a', 230a", 230a''' and 230a''''. A skilled person shall understand, in another embodiment, the power splitters may be cascaded in more than two levels. The split ratio of the power splitters in each level is not limited to the given example, and can be any possible value.

In the embodiment shown in Fig. 2, ONUs 230a", 230a''', 230a"", 230b and 230d are already in operation, and ONUs 230c and 230a' are not yet in operation. In other embodiments, there may be more than two ONUs that are not yet in operation.

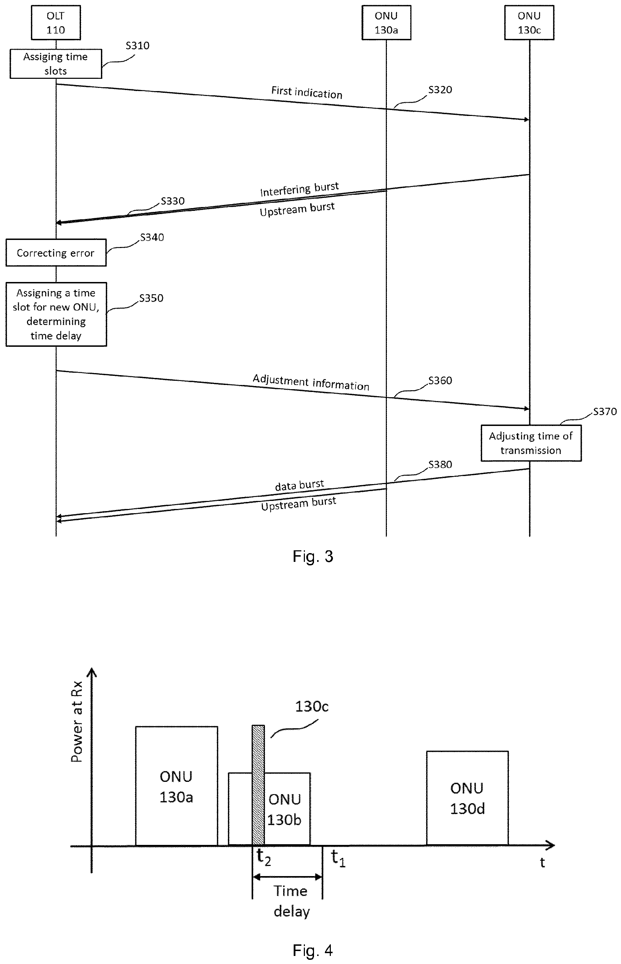

Fig. 3 shows a schematic flow diagram of a method according to the embodiment shown in Fig. 1.

In step S310, the OLT 110 assigns to each of the operational ONUs 130a, 130b, 130d a time interval within an upstream frame to transmit an upstream burst signal to the OLT 110.

In step S320, the OLT 110 transmits a first indication in a downstream frame to the first ONU 130c, the first indication indicating the first ONU 130c to transmit an interfering burst a first waiting time later after a reference time point. Preferably, the OLT 110 transmits the first indication repeatedly at a predetermined period interval, to poll the ONUs communicatively connected to the OLT 110 but not yet in operation.

Specifically, the first waiting time may be specified by the OLT 110 and transmitted to the ONU 130c. Alternatively or additionally, the first waiting time may be preconfigured in the ONU 130, or selected by the ONU 130 randomly.

In one embodiment, the reference time point is a time when the first indication is received at the first ONU 130c. In this embodiment, the upstream frame and the downstream frame are synchronized, for example, the upstream frame and the downstream frame are of same duration or the duration of the downstream frame is an integer multiple of the duration of the upstream frame. The first indication may indicate the first ONU 130c to transmit the interfering burst immediately after receiving this instruction. Alternatively, the first indication indicates the first ONU 130c to transmit the interfering burst x µs after receiving this instruction, where x could be sent from the OLT 110 or decided preferably randomly at the ONU 130c.

In another embodiment, the reference time point is a clock recorded at the first ONU 130c and it is related to a duration of the upstream frame. A skilled person shall understand, the reference time point is periodically repeated at the first ONU 130c. For example, the reference time point is the time when a new upstream frame begins in view of the ONU 130c. Specifically, when the upstream frame and the downstream frame are not synchronized, and the first indication may indicate the ONU 130c to transmit the interfering burst x µs after the beginning of the new upstream frame, where x could be sent from the OLT or decided preferably randomly at the ONU 130c.

In step S330, the ONU130c transmits the interfering burst to the OLT 110 at a time of transmission. Specifically, the interfering burst may have a predetermined duration. For example, if the interfering burst is a physical layer operation, administration and maintenance message, PLOAM message, the duration of the interfering burst is predetermined. Preferably, the interfering burst is transmitted with a maximum transmitter power and a maximum modulation speed of the ONU 130c.

Specifically, in one embodiment, the upstream frame and the downstream frame are synchronized, and the time of transmission may be a time immediately after the first instruction is received. Alternatively, the time of transmission is randomly delayed from a time when the first indication is received. In another embodiment, the upstream frame and the downstream frame are not synchronized, and the time of transmission may be a time that is x µs later than the beginning of the new upstream frame. x could be sent from the OLT or decided preferably randomly at the ONU.

Specifically, the duration of the interfering burst from the ONU 130c is within a range ensuring the errors introduced by the interfering burst can be corrected based on the FEC code. A typical 8-bit Reed-Salomon code RS (248, 216) is able to restore 114 consecutive errors, i.e. a burst-error of 11.4 ns in a 10Gbit/s PON system. In this way, there are no post-FEC errors. To enable this procedure, the PON system has to be operated/deployed slightly below the available maximum optical power budget specified by a given standard and budget class. For a burst duration of 31.25 µs the number of transmitted bits are approximately 312000 at 10 Gbit/s. The burst error capability is 114 consecutive burst errors. By rough approximation, this means that the noise background due to random errors (without burst error due to collision) should be kept at approximately (1 E-3 -114/312000 = 6.3E-4), which fits within 1 dB margin of a power budget.

Fig. 4 shows a schematic diagram of an upstream signal received by the OLT 110.

As shown in Fig. 4, each of the operational ONUs 130a, 130b and 130c transmits in the upstream direction burst signals to the OLT 110 respectively at the time interval assigned to them. The interfering burst overlaps with the burst from an operational ONU 130b, and introduces errors in the burst signals from ONUs 130b. In another embodiment, the interfering burst may overlap with the burst signals from more than one operational ONU. Specifically, the burst signals from the ONUs 130b are encoded with a forward error correction, FEC, code.

In the following, the embodiment of the present invention will be described with respect to Fig. 3 and Fig. 4. After the OLT 110 receives the upstream signal comprising burst signals transmitted by the operational ONUs 130a, 130b, 130d and the interfering burst transmitted by the ONU 130c, it corrects in step S340 the errors in the burst signals from the ONU 130b based on the FEC code.

In Step S350, the OLT 110 assigns a time slot to the ONU 130c in the upstream frame, and determines a target time of reception t₁ of a data burst from the ONU 130c within the time slot. Furthermore, the OLT 110 determines a time delay Δt between the target time of reception t₁ and an actual time of reception t₂ of the interfering burst from the ONU 130c, Δt= t₁-t₂.

Specifically, the actual time of reception t₂ is determined by locating and evaluating the errors introduced by the interfering burst from the ONU 130c.

In PON systems FEC codes are implemented in GPON, NG-PON2, XGS-PON and it will be implemented in 25G IEEE PONs. Thus, higher optical power budgets are achievable by allowing a reduced signal performance at the receiver input by accepting a higher bit error ratio (BER) of e.g., 1 E-3 (pre-FEC BER). This standardized FEC can be used to identify syndromes/errors in the data streams. Thus, with use of FEC in upstream direction, the position of bit errors can be located and corrected. In case that the interfering burst is causing crosstalk and thus errors onto burst signal of an already operational ONU 130b, the FEC will identify a burst error syndrome and can provide the time instance of these errors.

In step S360, the OLT 110 transmits an adjustment information in a downstream frame to the ONU 130c. The adjustment information indicates that a time slot is assigned to the first ONU 130c in the upstream frame and indicates the ONU 130c to transmit a data burst based on the time delay determined in step S350. The adjustment information may comprise the time delay Δt.

In Step S370, the ONU 130c determines an adjusted time of transmission based on the time of transmission and the time delay Δt. The time of transmission is the time the ONU 130c uses to transmit the interfering burst in step S330. In Step S380, the ONU 130c transmits a data burst to the OLT 110 at the adjusted time of transmission. Advantageously, the data burst is transmitted with a maximum transmitter power and a maximum modulation speed of the ONU 130c.

A skilled person shall understand, the duration of the data burst shall fit in the time slot assigned to the first ONU. In one embodiment, the data burst transmitted by the ONU 130c is a PLOAM, message. Advantageously, the interfering burst transmitted by the ONU 130c is also a PLOAM message, so that the new ONU does not need to change the content of the burst during the starting up procedure.

According to the present invention, the data burst from the ONU 130c will not be overlapped with the burst signals from other operational ONUs 130a,130b and 130d. The data burst from the ONU 130c can be successfully received by the OLT 110 in the time slot assigned to the first ONU 130c. The OLT 110 may read the information contained in the data burst from the ONU 130c. A start-up procedure is completed without configuring any quiet window.

In the embodiment with more than one ONU that is not yet in operation, for example, the embodiment shown in Fig. 2, the ONUs 230c and 230a' are not yet in operation. The first indication may be transmitted in a broadcasting manner. Upon receiving the first indication, each of the ONUs that are not yet in operation may choose a duration for the interfering burst and transmit the interfering burst to the OLT 210. Specifically, the duration the interfering burst can be predetermined in the new ONUs or randomly selected by the new ONUs. The duration of the interfering burst can be used later as an identification of the new ONUs.

In the embodiment shown in Fig. 2, the ONUs 230c transmits an interfering burst having a duration of 10 ns to the OLT 210, and the ONU 230a' transmits an interfering burst having a duration of 5 ns to the OLT 210.

After receiving the upstream signal, the OLT 210 determines a number of the interfering burst comprised in the upstream signal by evaluating errors in the upstream signal.

If there is only one interfering burst in the upstream signal, the method proceeds as described above with respect to Fig. 3. If there is more than one interfering burst, the OLT 210 additionally determines the duration of each interfering burst and uses the determined duration as an indication of the respective ONU. Then, the OLT 210 assigns a time slot for receiving a data burst from one of the ONUs that are not yet in operation, for example, the ONU, the interfering burst from which has a duration of 10 ns. Then, the OLT 210 determines a target time of reception t₁ within the time slot for the data burst from the ONU, the interfering burst from which has a duration of 10 ns.

Then, the OLT 210 determines a time delay Δt between the target time of reception t₁ and an actual time of reception t₂ of the interfering burst having a duration of 10 ns. Then the OLT 210 transmits an adjustment information in a downstream frame to the ONU 230c and 230a', preferably in a broadcasting manner. The adjustment information comprises the time delay Δt and an identification of the ONU, to which the time delay is applied. In this embodiment, the identification of the ONU 230 is the duration of the interfering burst.

After the ONUs 230c and 230a'receive the adjustment information, they determine whether the identification comprised in the adjustment information matches with their own identification. Specifically, the ONU 230a' determines that the duration of its own interfering burst (5 ns) does not match with that indicated in the adjustment information (10 ns), then, the ONU 230a' disregards the adjustment information from OLT 210. The ONUs 230c determines that the duration of its own interfering burst (10 ns) matches with that indicated in the adjustment information (10 ns), then, the ONUs 230c adjusts its time of transmission similarly as it is described above with respect to Fig. 3.

Then, the ONU 230c transmits a data burst to the OLT 110 at the adjusted time of transmission. The data burst from the ONU 230c will not be overlapped with the burst signals from other operational ONUs. The data burst from the ONU 230c can be successfully received and read by the OLT 210. A start-up procedure is completed without configuring any quiet window.

## Claims

1. A method in an Optical Line Terminal, OLT (110), of assisting a first Optical Network Unit, ONU (130c), starting up a communication with the OLT (110), the OLT (110) being communicatively coupled to the first ONU (130c) that is not yet in operation and a first number of ONUs (130a, 130b, 130d) that are already in operation, wherein, the first number is a natural number;
the method comprising:
a) assigning to each of the first number of ONUs (130a, 130b, 130d) a time interval within an upstream frame to transmit an upstream burst signal to the OLT (110);
b) transmitting a first indication in a downstream frame to the first ONU (130c), the first indication indicating the first ONU (130c) to transmit an interfering burst a first waiting time later after a reference time point;
c) receiving an upstream signal comprising burst signals transmitted by the first number of ONUs (130a, 130b, 130d) and the interfering burst transmitted by the first ONU (130c), wherein, the interfering burst introduces errors in burst signals from at least one of the first number of ONUs (130b), and wherein, the burst signals from the at least one of the first number of ONUs (130b) are encoded with a forward error correction, FEC, code;
d) correcting the errors in the burst signals from the at least one of the first number of ONUs (130b) based on the FEC code;
e) assigning a time slot to the first ONU (130c) in the upstream frame, and determining a target time of reception (t₁) of a data burst from the first ONU (130c) within the time slot;
f) determining a time delay between the target time of reception (t₁) and an actual time of reception (t₂) of the interfering burst from the first ONU (130c), wherein, the actual time of reception (t₂) is determined by locating the errors introduced by the interfering burst from the first ONU (130c);
g) transmitting an adjustment information in a downstream frame to the first ONU (130c), the adjustment information indicating the time slot assigned to the first ONU (130c) in the upstream frame and indicating the first ONU (130c) to transmit a data burst based on the time delay determined in step f);
h) receiving a data burst transmitted by the first ONU (130c) in the time slot.

2. A method according to claim 1, the upstream frame and the downstream frame being of same duration or a duration of the downstream frame being an integer multiple of a duration of the upstream frame, wherein, the reference time point is a time when the first indication is received at the first ONU (130c).

3. A method according to claim 1, wherein, the reference time point is a clock recorded at the first ONU (130c) and related to a duration of the upstream frame.

4. A method according to claim 1 or 2, the OLT being communicatively coupled to more than one first ONU that is not yet in operation,
the method further comprising:
- determining a number of the interfering burst comprised in the upstream signal by evaluating errors in the upstream signal;
if there is only one interfering burst, the adjustment information comprising the time delay;
if there is more than one interfering burst, the adjustment information comprising the time delay and an identification of the first ONU to which the time delay is applied.

5. A method according to claim 1, wherein, a wavelength of a downstream signal is different from that of an upstream burst.

6. A method according to claim 1, further comprising: transmitting the first indication repeatedly at a predetermined period interval.

7. A method according to claim 1, wherein, the data burst transmitted by the first ONU (130c) is a physical layer operation, administration and maintenance message, PLOAM, message.

8. A method in a first Optical Network Unit, ONU (130c), of starting up a communication with an Optical Line Terminal, OLT (110), the OLT (110) being communicatively coupled to the first ONU (130c), and a first number of ONUs (130a, 130b, 130d) that are already in operation, the first number being a natural number, each of the first number of ONUs (130a, 130b, 130d) being assigned to a time interval within an upstream frame to transmit an upstream signal to the OLT (110); the method comprising:
a) receiving a first indication in a downstream frame from the OLT (110), the first indication indicating the first ONU (130c) to transmit an interfering burst a first waiting time later after a reference time point;
b) transmitting the interfering burst to the OLT at a time of transmission;
c) receiving an adjustment information in a downstream frame from the OLT (110), the adjustment information indicating a time slot assigned to the first ONU (130c) in the upstream frame and indicating the first ONU (130c) to transmit a data burst based on a time delay;
d) determining an adjusted time of transmission based on the time of transmission and the time delay;
e) transmitting a data burst to the OLT (110) at the adjusted time of transmission.

9. A method according to claim 8, wherein, the first waiting time is received from the OLT (110) or determined, in particular, randomly determined, by the first ONU (130c).

10. A method according to claim 8, the OLT being communicatively coupled to more than one first ONU that is not yet in operation, and the adjustment information comprising the time delay and an identification of the first ONU to which the time delay is applied,
prior to step d), the method further comprising:
- determining whether the identification comprised in the adjustment information matches with an identification of the first ONU (130a);
if so, the method going on with steps d)-e);
else, disregarding the adjustment information from OLT (110).

11. A method according to claim 10, the interfering burst having a predetermined duration or a random duration within a range ensuring the errors introduced by the interfering burst can be corrected based on the FEC code, wherein, the duration of the interfering burst is the identification of the first ONU (130c).

12. A method according to claim 8, wherein, the interfering burst and/or the data burst are transmitted with a maximum transmitter power and a maximum modulation speed of the first ONU (130c).

13. A method according to claim 8, wherein, the data burst is a physical layer operation, administration and maintenance message, PLOAM, message.

14. An Optical Line Terminal, OLT (110), communicatively coupled to a first ONU (130c) that is not yet in operation and a first number of ONUs (130a, 130b, 130d) that are already in operation, wherein, the first number is a natural number;
the OLT (110) being configured to:
a) assign to each of the first number of ONUs (130a, 130b, 130d) a time interval within an upstream frame to transmit an upstream burst signal to the OLT (110);
b) transmit a first indication in a downstream frame to the first ONU (130c), the first indication indicating the first ONU (130c) to transmit an interfering burst a first waiting time later after a reference time point;
c) receive an upstream signal comprising burst signals transmitted by the first number of ONUs (130a, 130b, 130d) and the interfering burst transmitted by the first ONU (130c), wherein, the interfering burst introduces errors in burst signals from at least one of the first number of ONUs (130b), and wherein, the burst signals from the at least one of the first number of ONUs (130b) are encoded with a forward error correction, FEC, code;
d) correct the errors in the burst signals from the at least one of the first number of ONUs (130b) based on the FEC code;
e) assign a time slot to the first ONU (130c) in the upstream frame, and determine a target time of reception (t₁) of a data burst from the first ONU (130c) within the time slot;
f) determine a time delay between the target time of reception (t₁) and an actual time of reception (t₂) of the interfering burst from the first ONU (130c), wherein, the actual time of reception (t₂) is determined by locating the errors introduced by the interfering burst from the first ONU (130c);
g) transmit an adjustment information in a downstream frame to the first ONU (130c), the adjustment information indicating the time slot assigned to the first ONU (130c) in the upstream frame and indicating the first ONU (130c) to transmit a data burst based on the time delay determined in step f);
h) receive a data burst transmitted by the first ONU (130c) in the time slot.

15. A first Optical Network Unit, ONU (130c), being communicatively coupled to an Optical Line Terminal, OLT (110), the OLT (110) being further communicatively coupled to a first number of ONUs (130a, 130b, 130d) that are already in operation, the first number being a natural number, each of the first number of ONUs (130a, 130b, 130d) being assigned to a time interval within an upstream frame to transmit an upstream signal to the OLT (110);
the first ONU (130c) being configured to:
a) receive a first indication in a downstream frame from the OLT (110), the first indication indicating the first ONU (130c) to transmit an interfering burst a first waiting time later after a reference time point;
b) transmit the interfering burst to the OLT at a time of transmission;
c) receive an adjustment information in a downstream frame from the OLT (110), the adjustment information indicating a time slot assigned to the first ONU (130c) in the upstream frame and indicating the first ONU (130c) to transmit a data burst based on a time delay;
d) determine an adjusted time of transmission based on the time of transmission and the time delay;
e) transmit a data burst to the OLT (110) at the adjusted time of transmission.
